(19) Europäisches Patentamt
European Patent Office
Office européen des brevets

(11) **EP 3 908 227 B1**

(12) **EUROPEAN PATENT SPECIFICATION**

(45) Date of publication and mention
of the grant of the patent:
**13.11.2024   Bulletin 2024/46**

(21) Application number: **20707460.0**

(22) Date of filing: **05.03.2020**

(51) International Patent Classification (IPC):
*A61C 17/18* (2006.01)   *A61C 17/20* (2006.01)
*A61C 3/03* (2006.01)

(52) Cooperative Patent Classification (CPC):
**A61C 17/18; A61C 3/03; A61C 17/20;** A61C 19/04;
A61C 2204/007

(86) International application number:
**PCT/EP2020/055948**

(87) International publication number:
**WO 2020/178410 (10.09.2020 Gazette 2020/37)**

(54) **TIP ELEMENT FOR AN ULTRASONIC DENTAL TREATMENT DEVICE AND DENTAL TREATMENT DEVICE HAVING SUCH A TIP ELEMENT**

SPITZENELEMENT FÜR EINE ULTRASCHALLZAHNBEHANDLUNGSVORRICHTUNG UND ZAHNBEHANDLUNGSVORRICHTUNG MIT SOLCH EINEM SPITZENELEMENT

POINTE POUR UN DISPOSITIF DE TRAITEMENT DENTAIRE À ULTRASONS ET DISPOSITIF DE TRAITEMENT DENTAIRE DOTÉ D'UNE TELLE POINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2019 EP 19161409**

(43) Date of publication of application:
**17.11.2021   Bulletin 2021/46**

(73) Proprietor: **Ferton Holding S.A.
2800 Delémont (CH)**

(72) Inventors:
• **VUILLET, Romain
39400 Bellefontaine (FR)**
• **BIENAIMÉ, Alex
39220 Les Rousses (FR)**

(74) Representative: **Müller Schupfner & Partner Patent- und Rechtsanwaltspartnerschaft mbB (Muc)
Bavariaring 11
80336 München (DE)**

(56) References cited:
CN-U- 204 909 697    US-A- 5 899 693
US-A1- 2005 181 328    US-A1- 2015 245 884
US-A1- 2016 081 764    US-A1- 2018 140 403

EP 3 908 227 B1

## Description

The present invention concerns a tip element for an ultrasonic dental treatment device and a dental treatment device having such a tip element.

Dental calculus develops mostly in mouth areas that are difficult to access, in particular during home care treatments like a toothbrush or a water spray treatment. These areas are also difficult to access during a professional care treatment, especially during scaling, and calculi formed are hard and strongly attached to the teeth.

Ultrasonic scaling instruments are well known to efficiently remove hard calculus due to their power of ultrasonic vibrations and a low impact on teeth. A removal capacity of the ultrasonic scaling instrument is achieved by their ultrasonic vibrational power, which can be approximated to be proportional to an amplitude, i.e. a vibration amplitude, for a given stiffness of the tip element. Thereby, the amplitude needs to be optimized when determining a geometry of the tip element to ensure its efficiency, in a limit of an instrument resistance.

A low invasiveness of the tip element is ensured by a controlled ultrasonic vibration in one-dimensional or translation direction. The calculus is kicked, not cut, due to a force of the ultrasonic motion, having a low amplitude, but a high speed and a high acceleration due to a high frequency of the ultrasonic motion. This ensures a low contact force between teeth and instrument.

For kicking the calculus with low or no impact on teeth, a characteristic planar flexural motion of the tip element must be perfectly tangential to a teeth surface. For areas, which are difficult to access, particularly for mesial and distal access of molar and premolar teeth, it gets harder to guarantee the tangential positioning of the tip element with traditional straight tip elements.

To properly remove calculus in these areas, it turned out that the tip element has to be tilted to a certain angle, preferably to 35°. However, these instruments are known for having a low efficiency and it further turned out that the vibrational motion could not be properly controlled. For example, the actual amplitude is less than 30 μm at full motion, and a planar flexural motion could not be ensured. Especially due to its specific geometry, no ultrasonic vibration could be sent to the dental calculus to remove it.

Other solutions, including for example a different angle for the planar motion, could not ensure proper rerouting of the vibration motion. Solutions that ensure a proper rerouting of the vibration motion, in turn, could not guarantee a proper alignment of the tip element relative to the teeth, increasing the risk of teeth damages.

Further, DE 42 38 384 C1 concerns a motion transformation that transforms a first linear vibration to another second linear vibration being perpendicular to the previous one. It uses a radial mode of vibration, which re-orientates the vibration without any amplification. Thereby, the system of DE 42 38 384 C1 is not intended for scaling, but for instruments having a low amplitude and a low efficiency. Further, the element realizing the motion transformation is arranged between the hand piece and the tip element being reversibly attachable.

US 2016 0 081 764 A1 discloses an ultrasonic tip for ultrasonic instruments, and further provides a method of dental treatment of peri-implantitis using an ultrasonic tip operable to cooperate with an ultrasonic instrument to transmit ultrasonic vibrations to a surface of a dental implant to be treated, said implant and said ultrasonic tip being made of titanium.

CN 204 909 697 U discloses a tip having a ball-like end section.

US 2015 245 884 A1 concerns a lighted dental instruments and, more particularly, powered dental scalers incorporating both an integral light source and a fluid passageway that directs fluid adjacent to tooth surfaces with which the scalers are in contact.

US 5 899 693 A discloses a disposable dental tip incorporated in an ultrasonic scaler and a dental working distal end piece used for the dental tip.

US 2018 140 403 A1 concerns a moulded gauge used for both manual and automated inspection of the length of at least one ultrasonic scaler tip.

It is an object of the present invention to provide an improved tip element, which performs an ultrasonic vibration during its utilization, in particular with respect to its efficiency, its control of the motion along a tilted direction and its low invasiveness.

This object is achieved by the tip element according to claim 1, and a dental treatment device according to claims 11.

Preferred embodiments are incorporated in the dependent claims, the description and the figures.

According to the invention a tip element for a dental treatment device, in particular a scaler, is provided, wherein the tip element performs an ultrasonic vibration during its utilization, comprising

- a first end section for reversibly attaching the tip element to a hand piece,
- a second end section forming a dental tool and
- a motion transformation section arranged between the first end section and the second end section,

wherein, for transforming an ultrasonic vibration having a first vibration direction to an ultrasonic vibration having a second vibration direction, the motion transformation section has a first bended subsection and a second bended subsection.

The first end section forms a proximal end and the second end section forms a distal end of the tip element.

The tip element according to the invention includes a motion transformation section having a first bended subsection and a second bended subsection for transforming an ultrasonic vibration, having a second vibration direction, i. e. the tip element is at least double bended in the motion transformation section. Due to the motion transformation section it is advantageously possible to block at least a part of a forward and backward movement of the tip element, i. e. an ultrasonic vibration having a first direction, in particular at its first end section, and to transform this forward and backward movement at least partially to an up-and-down movement, i. e. an ultrasonic vibration having a second direction, at the end of the motion transformation section. For example, the forward and backward movement is performed parallel to a longitudinal direction and the up- and down-movement is directed perpendicularly to the forward and backward movement.

Furthermore, it is advantageously possible to fine tune an amplitude of the ultrasonic vibration, in particular at the end of the motion transformation section. This allows adapting the efficiency for properly removing calculus. It further turned out that the control of the motion transformation by the motion transformation section can be applied to different forms of the second end section, in particular to those that are designed for removing calculus in areas, being hard to access. Thereby, a controlled motion of the second end section, in particular in one certain plane, can be advantageously used to avoid hammering against the tooth during its utilization.

In particular, it is provided that the tip element is free of titanium. According to the invention, the tip element comprises a titanium amount of less than 80 weight-%, preferably less than 60 weight-% and most preferably less than 40 weight-%. Thereby, it is conceivable that the tip element includes a section being made of titanium. For example, a front end of the tip element is made of titanium. It is also thinkable that only a core section or a sleeve section is made of titanium. For example, the tip element is only coated with a titanium layer. Preferably, free of titanium means that the amount of titanium is less than 0.1 weight-%, preferably less than 0.05 weight-% and more preferably less than 0.02 weight-%.

Furthermore, it is preferably provided that the tip element does not extend only in one plane. In other words: the extension of the first end section, the second section and the motion transformation section define a volume, since they are not located or arranged in a common plane, in which the first end section, the second section and the motion transformation section can extend. In other words: The first end section, the second section and the motion transformation section define a set of three independent vectors.

Furthermore, the tip element is ball free, in the region of the pointed tip, i. e. the tip elements only tapers to its front end, without having an ball like front end.

Preferably, it is provided that the tip element is reversibly attachable to a hand piece including an activator unit that induces the ultrasonic vibration to the tip element, in particular to the first end section of the tip element. For example, the activator unit comprises a piezo transducer. Furthermore, in order to ensure continuity of the ultrasonic vibration between the hand piece (which includes the piezo-transducer) and the tip element, the hand piece and the tip element have an interface, preferably at a front side of the hand piece and the first (proximal) end section, for inserting the tip element to a corresponding recess of the hand piece. For example, the first end section of the tip element can be screwed to the hand piece or the hand piece and the first end section are configured to form a key lock principle mechanism. Preferably, the first end section of the tip element is screwed to the hand piece

Especially, the activation unit induces an ultrasonic vibration having the first vibration direction in the first end section, wherein the first vibration direction is parallel to a longitudinal direction of the hand piece, usually initiated by piezo transducer which is stacked longitudinally inside the actuator of the hand piece. The second end section particularly tapers to a pointed end that is in contact with the tooth during its utilization. To avoid damages at the tooth, it is preferably provided that the tip element, in particular the second (distal) end section of the tip element, has smooth edges. Preferably, the cross section of the tip element in the first end section is bigger than a cross section of the tip element in the second end section.

In particular, the tip element is a single piece, i. e. the tip element is constructed integrally. Especially, the first end section merges into the motion transformation section and/or the motion transformation section merges into the second end section. Further, it is provided that the second end section is configured to perform a planar flexural motion, in particular at its pointed end. "Planar" means that the movement is performed in a single plane, i.e. a two dimensional plane, without having a movement component perpendicular to that plane.

According to the invention, it is provided that a course of the tip element is bended

- about a first angle in the first bended subsection and
- about a second angle in the second bended subsection, wherein a difference between the first angle and the second angle is prefearbly smaller than 15°, more preferably smaller than 5° and most preferably smaller than 2°. In particular, the first bended subsection and the second bended subsection are bended in directions being opposite to each other but in the same plane. It is therefore conceivable that the first bended subsection and the second bended subsection form a plane, preferably without any torsion. Preferably, the first angle and the second angle are formed to be as equal to each other as possible for realizing a parallel lateral shift of the course of the tip element between the course of the tip element in front of the motion transformation section and the course of the tip element behind the motion transformation section. Preferably, the motion transformation section is specified by a course of the tip element, being not parallel to the first vibration direction and/or the longitudinal direction of the hand piece. The motion transformation section preferably has the shape of an "S".

Preferably, it is provided that the first angle and/or the second angle are between 80° and 140°, more preferably between 85° and 125° and most probably between 90° and 100° or even mainly 90°. By choosing the first angle as close as possible to 90°, it is advantageously possible to almost block the whole ultrasonic vibration having the first vibration direction and transfer an energy mainly completely to the vibration having the second vibration direction at the ending of the motion transformation section.

Particularly, it is provided that a first radius of curvature $R\alpha 1$, satisfying

$$\frac{D1}{2} < R\alpha 1 < 2 \cdot D1,$$

is assigned to the first bended subsection, wherein $D1$ is in the range between 1.2 and 4 mm. The second radius of curvature $R\alpha 2$, assigned to the second bended subsection, is determined by the lengths $L1$ and $L2$ and by the angle $\alpha 1$.

In particular, it is provided that the motion transformation section has a first length and the course of the tip element in the motion transformation section causes a lateral shift having a second length, wherein the first length is longer than the second length. By choosing the first length longer than the second length, it is advantageously possible to amplify the amplitude of the ultrasonic vibration, in particular of the ultrasonic vibration at the pointed end of the second end section. Preferably, the first and the second length are dimensioned to form an elliptic resonator, wherein the first length forms a large axis and the second length forms a short axis of the elliptic resonator.

Preferably, the first length and/or the second length is/are in a range between 3 to 8 mm. Thus, the first length and second length are dimensioned for transferring the ultrasonic vibration, having the first vibration direction, to the ultrasonic vibration, having the second vibration direction. Simultaneously, the first length and the second length are small enough for a simple handling of the tip element being attached to the hand piece.

Furthermore, it is particularly provided that the first length is equal to or longer than the second length and/or the first cross-section area is equal to or larger than the second cross-section area. Thus, it is possible to tune the amplitude, for example by modifying the ratio of the first and the second length and/or the first cross-section and the second cross-section area correspondingly.

Furthermore, it is particularly provided that the tip element has a core region and a cover region, wherein the cover region surrounds the core region, wherein along the course of the tip element the cover region modifies its extension in a direction perpendicular to the course of the tip element, in particular in the motion transformation section. Thus, another possibility for adapting the amplitude at the pointed end of the tip element is provided by adapting the size of the cover region. Preferably, the core region and the cover region are concentric to each other. Preferably, the modification of the size of the cover region is realized within the motion transfer section. The core region is preferably cylindrical and forms a channel for transporting a liquid stream, preferably water.

Preferably, it is provided that in the motion transformation section the cover region has a first cross-section area in a first cross section perpendicular to the course of the tip element, in particular measured at a beginning of the motion transformation section, and/or a second cross-section area in a second cross section perpendicular to the course of the tip element in the motion transformation section, in particular measured at an ending of the motion transformation section, wherein the first cross-section area is bigger than the second cross-section area. The size of the core region remains constant. Especially for the first cross-section area being bigger than the second cross-section area it is advantageously possible to amplify the amplitude of the ultrasonic vibration at the pointed end of the second end section. Actually, it turned out that an amplitude of 215 um at full power (when water is passing through the core region,) could be reached, in particular if the size modification has been combined with the elliptic resonator formed with the first length being bigger than the second length. For comparison, the same type of tip element without motion transformation section, having a first bended subsection and a second bended subsection, provides an amplitude of 60 $\mu$m under the same condition. Consequently, it is possible to amplify the amplitude by at least a factor of 2.5 by adapting the motion transformation section correspondingly.

Preferably, the cover region has a conical, stepped and/or exponential shape along the course of the tip element, in particular in the motion transformation section. Advantageously, it is possible to adapt the amplitude of the ultrasonic vibration at the pointed end of the tip element by adapting the shape of the cover region along the course of the tip element.

According to the invention, it is provided that, preferably in the second end section, the course of the tip element is bended in a tilted direction about a third angle relative to a main plane including the first bended subsection and the second bended subsection, wherein the third angle is between -75° and +75°, preferable between -35° and 35°. Especially, a third angle and/or a third radius of curvature is adapted depending on its planned application. For example, for a straight tip element the third angle is 0°. For curved instruments, preferred for mesial and distal treatment of molar or premolar teeth, the third angle is adapted to an area to be treated. For example, the range of the third angle is between -75° and 75° depending on the mouth quadrant. For -35° and 35° as third angle, access to areas otherwise hard to access for a tip element is simplified.

In one embodiment, it is provided that in the second end section the course of the tip element is bended about a fourth angle in a plane including a part of the second end section, extending in the tilted direction. This is particularly useful for dental applications. In particular, the second end section is bended such that the second end section defines a plane, in particular tilted about the third angle. During its utilization, the pointed end performs its ultrasonic vibration in said plane to remove the calculus from the teeth. Thereby, the second end section, in particular its pointed end, performs a planar flexural motion, for example a motion tangential to the tooth surface. Advantageously, the geometry of the motion transformation section ensures that the pointed tip performs no additional movement out of said plane that would otherwise hammer the tooth and might cause damages.

Another aspect of the present description is a motion transformation section for the tip element. All features and benefits described above for the tip element can be applied to the motion transformation section analogously and vice versa. It is even considerable that the first end section, the second end section and/or the transformation section can be put together to form the desired tip element. For example, the transformation section and the second end section provides an interface to reversibly attach the second end section to the motion transformation section. Thus, it is possible to interchange the second end region and for example change the third angle and/or the fourth angle by using another differently bended second end section.

Furthermore, the present invention concerns a dental treatment device having a tip element according to the present invention. All features and benefits described in the context of the tip element apply analogously to the dental treatment device and vice versa. Preferably, the dental treatment device comprises an activator unit for inducing a linear ultrasonic vibration to the tip element, especially to a tip element being reversibly attachable to the activator unit. In particular, the tip element is screwed to the dental treatment device at its front side.

Preferably, the dental treatment device is configured to establish a linear vibration of the tip element having a frequency of less than 30 Hz, preferably a frequency between 20 Hz and 30 Hz.

Another aspect of the present description concerns a tip card device for checking a status of a tip element according to the present invention, comprising a holding element for arranging the tip element in a fixed orientation relative to a projection area. Thus, it is advantageously possible to check whether the transformation section and/or the second end section has been deformed during its utilization and the user is informed whether he needs to replace the tip element. Thereby, the holding element is configured such that the tip element can be checked from different perspectives, for example by transferring the tip element into a certain orientation that allows checking the geometry of the tip element on the same projection area. It is also thinkable that the projection area forms a box, in particular an open box or a transparent box, which allows to check the geometry of the tip element from different perspectives. All features and benefits described in the context of the tip element apply analogously to the tip card device and vice versa.

In the drawings:

Fig. 1    schematically shows a tip element according to a preferred embodiment in a first perspective view,

Fig.2    schematically shows the tip element of figure 1 in a second perspective view

Fig.3    schematically shows a second end section of the tip element shown in the figures 1 and 2.

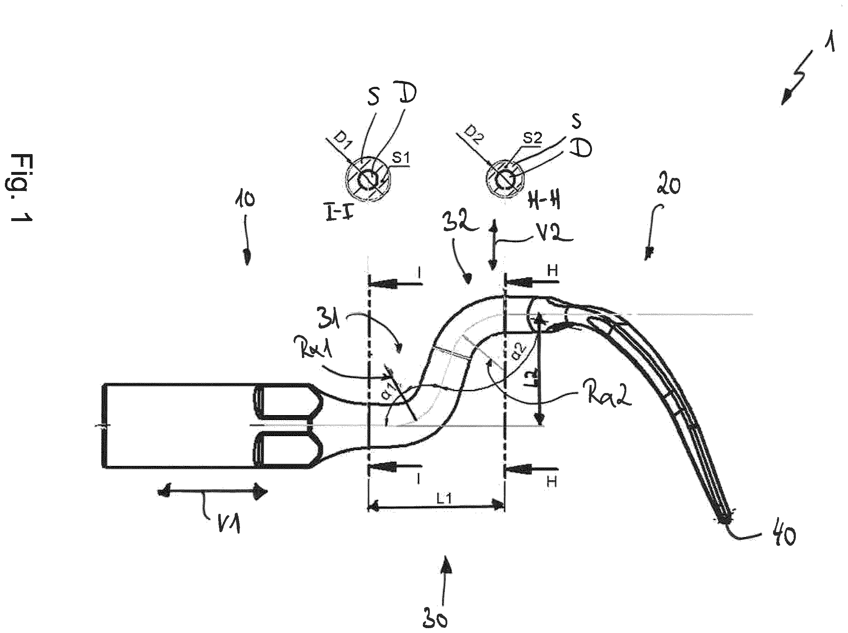

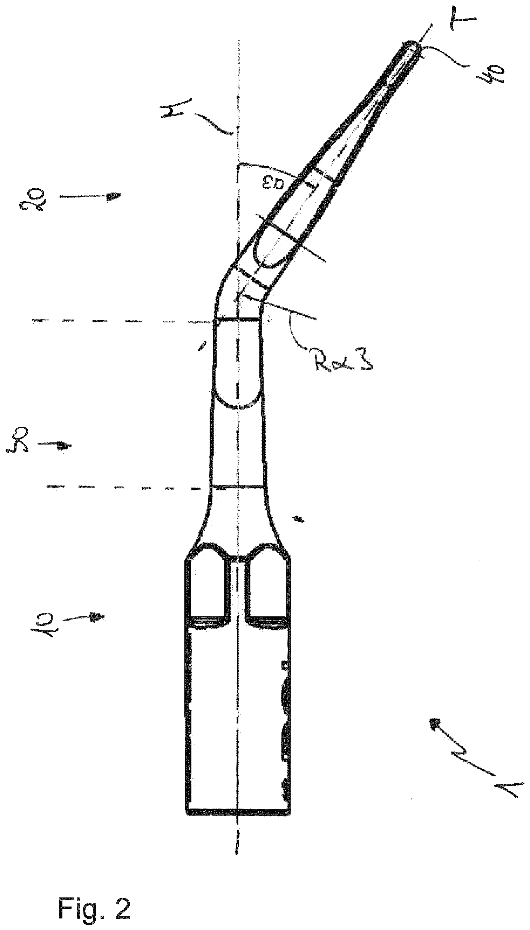

In the Figures 1 and 2 a tip element 1 according to a preferred embodiment of the present invention is shown. For example, the tip element 1 is a scaling tip, i. e. tip element 1 that is used to clean teeth by scaling. Preferably, during its utilization the tip element 1 is reversibly attached to a hand piece (not shown) and, in particular, in the mounted state the hand piece and the tip element 1 form a medical instrument, preferably a dental instrument. In particular, the tip element 1 and the hand piece are connected to each other via corresponding interfaces being respectively assigned to the hand piece and the tip element 1.

For removing tartar, calculus and/or plaque from the teeth the hand piece having the tip element 1 is led to the teeth such that the tip element 1 comes into contact with the surface of the teeth. Preferably, the hand piece comprises an activator unit for activating a movement, in particular an ultrasonic movement, of the tip element 1 connected to the hand piece. This ultrasonic movement supports removing spots, plaque and/or dentine tartar. The tip element 1 might be used in subgingival or supragingival treatments.

In particular, the tip element 1 comprises a first end section 10 and a second end section 20 being opposite to the first end section 10 along a course of the tip element 1. The first proximal end section 10 is configured for being attached to the hand piece, for example by plugging in the tip element 1 into a corresponding recess of the hand piece. In its utilization the activator unit transfers or induces an ultrasonic vibration to the first end section 10 causing an ultrasonic vibration along a first vibration direction V1. For example, the activator unit comprises a piezo transducer for realizing such an ultrasonic movement. The hand piece might further comprise a cooling unit, such a cooling circuit including a water inlet and/or outlet, for cooling the hand piece during its operation.

The second distal end section 20 forms a tool that is preferably in contact with the teeth during utilization of the tip element 1. In the present embodiment of figure 1, it is provided that the second end section 20 tapers along the course or the tip element 1 for forming a pointed tip 40 at its front side being faced to the teeth during its utilization.

To modify an amplitude of the ultrasonic vibration, in particular at the pointed end 40 of the tip element 1 in the second end section 20, a geometry of the tip element 1 is adapted correspondingly. In particular, a motion transformation section 30 is provided between the first end section 10 and the second end section 20. The motion transformation section 30 preferably is S-shaped and includes a first bended subsection 31 and a second bended subsection 32. Preferably, the second bended subsection 32 directly follows the first bended subsection 31 along the course of the tip element 1. In particular, the tip element 1 is bended in the first subsection 31 about a first angle α1 and in the second bended subsection 32 about a second angle α2, wherein a difference between the first angle α1 and the second angle α2 is smaller than 15°, more preferably smaller than 5° and most preferably smaller than 2°. Especially, the first bended subsection 31 and the second bended subsection 32 are bended in opposite direction for forming an S-like geometry.

Furthermore, the first angle α1 and/or the second angle α2 is/are between 80° and 140°, more preferably between 85° and 125° and most probably between 90° and 100° or is even mainly 90°. In particular, the course of the tip element 1 in the first bended subsection 31 mainly changes its direction about 90°. As a consequence, it is possible to block the ultrasonic vibration having the first vibration direction V1 and to transfer the ultrasonic vibration having a first vibration direction V1 in the first end section 10 of the tip element 1 into an ultrasonic vibration having a second vibration direction V2 at the end of the motion transformation section 30, wherein the second vibration direction V2 mainly extends perpendicularly to the first vibration direction V1. Thus, a motion transformation can be realized. In particular, an ultrasonic vibration parallel to the course of the tip element 1, i. e. a backward - forward movement, is transferred to an ultrasonic vibration perpendicular to the course of the tip element 1, i. e. to an up-and -down movement of the tip element 1 at the end of the motion transformation section 30.

Actually, a first radius of curvature Rα1 can be assigned to the first bended subsection 31, wherein the radius of curvature Rα1 satisfies

$$\frac{D1}{2} < R\alpha1 < 2 \cdot D1,$$

wherein D1 is in the range between 1.2 and 4 mm and corresponds to the length of the cover and core region of the tip element in a first cross section. The same applies to a second radius of curvature Rα2 that can be assigned to the second bended subsection 32.

Moreover, it is preferably provided that the motion transformation section 30 extends about a first length L1 measured in a direction parallel to the first vibration direction V1. Due to the form of the first bended subsection 31 and second bended subsection 32, the course of the tip element 1 behind the second bended subsection 32 is laterally or radially shifted to the course of the tip element 1 in front of the first bended subsection 31 (seen in a direction from the first end section 10 to the second end section 20). Preferably, a second length L2 is assigned to the radial shift caused by the motion transformation sector 30.

By choosing a certain ratio between the first length L1 and the second length L2 it is advantageously possible to modify the amplitude of the ultrasonic vibration. For example, the amplitude is amplified, if the second length L2 is smaller than the first length L1, and the amplitude is reduced, if the second length L2 is bigger than the first length L1. Especially, the first length L1 and the second length L2 form axes of an elliptic resonator. The amplitude mainly remains constant, if the second length L2 is equal to the first length L1. In this case, the first length L1 and the second length L2 represent a radius of a circle.

Furthermore, the tip element 1 has a core region D and a cover region S, wherein in a first cross section I-I perpendicular to the course of the tip element 1 the core region D is surrounded by the cover region S, preferably completely surrounded in the first cross section I-I. Preferably the core region is cylindrical and forms a channel for transporting a liquid stream, preferably water. By modifying a dimension of the cover region S along its course in the motion transformation section 30, it is advantageously possible to adapt the amplitude of the ultrasonic vibration. This can be done in addition to the modification of the amplitude by the ratio of the first length L1 and the second length L2. In particular, the cover region S has a first cross-section area S1 in the first cross section I-I perpendicular to the course of the tip element 1 and a second cross-section area S2 in a second cross section H-H perpendicular to the course of the tip element 1. Preferably, the first cross-section area S1 is assigned to a beginning of the motion transformation section 30 and the second cross-section area S2 to an ending of the motion transformation section 30. Thereby, the beginning of the motion transformation section 30 is preferably defined by the last cross section (seen in a direction from the first end section 10 to the second end section 20) of the tip element 1 perpendicular to the course of the tip element 1 that is perpendicular to the first vibration direction V1. The ending of the motion transformation section 30 is preferably defined by the cross section perpendicular to the course of the tip element 1, wherein said cross section (seen in a direction from the first end section 10 to the second end section 20)

- follows the first bended subsection 31 and second bended subsection 32 and

- is again perpendicular to the first vibration direction V1 for the first time behind the first bended subsection 31 and the second bended subsection 32.

Furthermore, a first length D1 is assigned to the cover S and core region D in the first cross section I-I and a second length D2 is assigned to the cover S and core region D in the second cross section H-H. When the cover region S and the core region D are cylindrical, both D1 and D2 represent the diameter of the core region plus the cover region. The diameter of the core region is preferably constant along the tip element.

By choosing the second cross-section area S2 of the cover region S smaller than the first cross-section area S1, it is advantageously possible to amplify the amplitude of the ultrasonic vibration. Alternatively, it is possible to maintain the amplitude by choosing the second cross-section area S2 equal to the first cross-section area S1 or to decrease the amplitude by choosing the second cross-section area S2 bigger than the first cross-section area S1.

Preferably, the cover section S has a conical, exponential and/or stepped shape along the course of the tip element 1 in the motion transformation section 30.

Figure 2 shows the tip element 1 in a perspective view parallel to a main plane M including the first bended subsection 31 and the second bended subsection 32. As a consequence of this perspective, the double bended structure of the motion transformation section 30 cannot be observed in this illustration. In the embodiment shown in Figure 2 the second end section 20 of the tip element 1 is bended into a tilted direction T relative to the main plane M, including the first bended subsection 31 and the second subsection 32, about a third angle $\alpha 3$, wherein the third angle $\alpha 3$ is 35° in the shown embodiment. Due to the bending about the third angle $\alpha 3$, at least a part of the second end section 20 extends along the tilted direction T for performing a planar flexural motion during utilization of the tip element 1. The third angle $\alpha 3$ or a corresponding third radius of curvature $R\alpha 3$ depends on a planned application of the tip element 1, in particular a region of the mouth the tip element 1 is intended for.

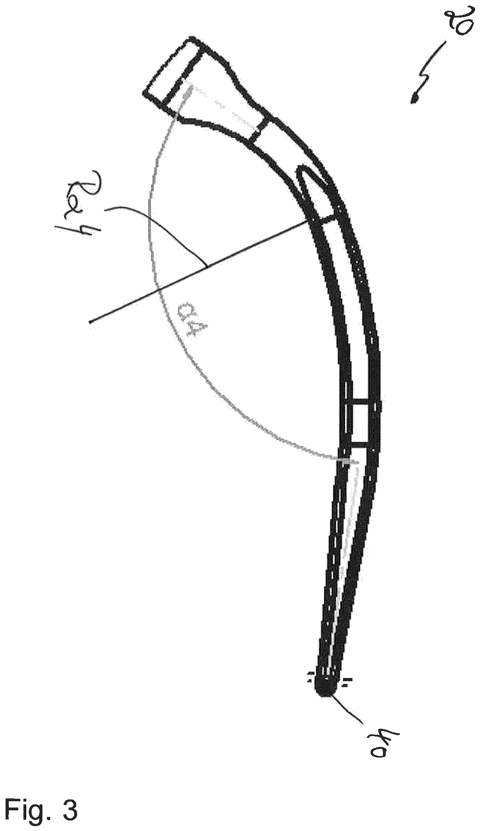

Figure 3 shows the second end section 20 of the tip element 1 illustrated in the figures 1 and 2. Especially, the part of the second end section 20, extending along the tilted direction T, is bended about a fourth angle $\alpha 4$ and forms a plane including the tilted direction T. The fourth angle $\alpha 4$ or a corresponding fourth radius of curvature $R\alpha 4$ is adapted depending on surfaces to access and preferably ranges between 90° and 135°, more preferably ranges between 110° and 120° and most preferably is mainly 117°. Preferably, a bend of the course of the second end section 20 about the third angle $\alpha 3$ is perpendicular to a bend of the course of the second end section 20 about a fourth angle $\alpha 4$.

In addition to the motion transformation section 30, the geometry of the application part of the tip element (section 20) has a significant influence on the direction of the vibration. To ensure the correct orientation, an anti-axisymmetric structure is retained to limit hammering motions that may be introduced by parasitic motions when the ultrasonic vibration is not controlled. The anti-axisymmetric structure gives a preferential direction to the vibration by filtering parasitic motions thanks to a specific quadratic moment, i.e. selective stiffness, and select only the vibration on the rerouted direction.

Reference signs:

| | |
|---|---|
| 1 | tip element |
| 10 | first end section |
| 20 | second end section |
| 30 | motion transformation section |
| 31 | first bended subsection |
| 32 | second bended subsection |
| 40 | pointed tip |
| V1 | first vibration direction |
| V2 | second vibration direction |
| $\alpha 1$ | first angle |
| $\alpha 2$ | second angle |
| $\alpha 3$ | third angle |
| $\alpha 4$ | fourth angle |
| I-I | first cross section |
| H-H | second cross section |
| L1 | first length |
| L2 | second length |
| S | core region |
| D | cover region |
| S1 | first cross-section area |
| S2 | second cross-section area |
| D1 | first further length |
| D2 | second further length |
| $R\alpha 1$ | first radius of curvature |
| $R\alpha 2$ | second radius of curvature |
| $R\alpha 3$ | third radius of curvature |
| $R\alpha 4$ | fourth radius of curvature |
| M | main plane |
| T | tilted direction |

**Claims**

1. A tip element (1) preferably for a dental treatment device, in particular a scaler, wherein the tip element (1) performs an ultrasonic vibration during its utilization, comprising

   - a first end section (10) for reversibly attaching the tip element (1) to a hand piece,
   - a second end section (20), forming a dental tool, and
   - a motion transformation section (30) arranged between the first end section (10) and the second end section (20),
   wherein, for transforming an ultrasonic vibration having a first vibration direction (V1) to an ultrasonic vibration having a second vibration direction (V2), the motion transformation section (30) has a first bended subsection (31) and a second bended subsection (32), wherein the tip element (1) has a pointed tip and wherein a course of the tip element (1) is bended

- about a first angle ($\alpha$1) in the first bended subsection (31) and
- about a second angle ($\alpha$2) in the second bended subsection (32) wherein in the second end section (20) the course of the tip element (1) is bended in a tilted direction (T) about a third angle ($\alpha$3) relative to a main plane (M) including the first bended subsection (31) and the second bended subsection (32), wherein the third angle ($\alpha$3) is between -75° and +75°, preferable between -35° and 35°,**characterized in that** the tip element (1) comprises a titanium amount of less than 80 weight - %.

2. The tip element (1) according to claim 1, wherein a difference between the first angle ($\alpha$1) and the second angle ($\alpha$2) is smaller than 15°, more preferably smaller than 5° and most preferably smaller than 2.5°.

3. The tip element (1) according to claim 2, wherein the first angle ($\alpha$1) and/or the second angle ($\alpha$2) are between 80° and 140°, more preferably between 85° and 125° and most probably between 90° and 100° or is even mainly 90°.

4. The tip element (1) according to one of the preceding claims, wherein the tip element (1) has a core region (D) and a cover region (S), wherein the cover region (S) surrounds the core region (D), wherein along the course of the tip element (1) the cover region (S) modifies its extension in a direction perpendicular to the course of the tip element (S), in particular in the motion trans formation section (30).

5. The tip element (1) according to the preceding claim, wherein a first radius $R\alpha$1 of curvature, satisfying

$$\frac{D1}{2} < R\alpha1 < 2 \cdot D1,$$

is assigned to the first bended subsection (31), wherein $D$1 is in the range between 1.2 and 4 mm and corresponds to the length of the cover and core region of the tip element in the first cross section.

6. The tip element (1) according to one of the preceding claims, wherein the motion transformation section (30) has a first length (L1) and the course of the tip element (1) in the motion transformation section (30) causes a lateral shift having a second length (L2), wherein the first length (L1) is longer than the second length (L2).

7. The tip element (1) according to claim 6, wherein the first length (L1) and/or the second length (L2) is in a range between 3 and 8 mm.

8. The tip element (1) according to claim 4, wherein the cover region (S) has a conical, stepped and/or exponential shape along the course of the tip element (1), in particular in the motion transformation section (30).

9. The tip element (1) according to one of the preceding claims, wherein in the second end section (20) the course of the tip element (1) is bended about a fourth angle ($\alpha$4) in a plane including a part of the second end section (20) extending in the tilted direction (T).

10. The tip element (1) according to claim 6, wherein

- the first length (L1) is equal or smaller than the second length (L2) and/or
- the first cross-section area (S1) is equal or smaller than the second cross-section area (S2).

11. A dental treatment device including a tip element (1) according to one of the claims 1 to 10.

**Patentansprüche**

1. Spitzenelement (1) vorzugsweise für eine zahnärztliche Behandlungsvorrichtung, insbesondere einen Scaler, wobei das Spitzenelement (1) während seiner Verwendung eine Ultraschallvibration ausführt, aufweisend

- einen ersten Endabschnitt (10) zum reversiblen Anbringen des Spitzenelements (1) auf ein Handstück,
- einen zweiten Endabschnitt (20), der ein zahnmedizinisches Werkzeug bildet, und
- einen Bewegungsumwandlungsabschnitt (30), der zwischen dem ersten Endabschnitt (10) und dem zweiten Endabschnitt (20) angeordnet ist, wobei der Bewegungsumwandlungsabschnitt (30) zur Umwandlung einer Ultraschallvibration mit einer ersten Vibrationsrichtung (V1) in eine Ultraschallvibration mit einer zweiten Vibrationsrichtung (V2) einen ersten gebogenen Teilabschnitt (31) und einen zweiten gebogenen Teilabschnitt (32) aufweist, wobei das Spitzenelement (1) eine zulaufende Spitze aufweist und wobei ein Verlauf des Spitzenelements (1)
- um einen ersten Winkel ($\alpha$1) in dem ersten gebogenen Teilabschnitt (31) und
- um einen zweiten Winkel ($\alpha$2) in dem zweiten gebogenen Teilabschnitt (32) gebogen ist, wobei in dem zweiten Endabschnitt (20) der Verlauf des Spitzenelements (1) in einer geneigten Richtung (T) um einen dritten Winkel ($\alpha$3) relativ zu einer Hauptebene (M), die den ersten gebogenen Teilabschnitt (31) und den zweiten gebogenen Teilabschnitt (32) einschließt, gebogen ist, wobei der dritte Winkel ($\alpha$3) zwischen -75° und +75°, vorzugsweise zwischen -35° und 35° liegt, **dadurch gekennzeichnet, dass** das Spitzenelement (1) eine Titananteil von weniger als 80 Gew.-% aufweist.

2. Spitzenelement (1) nach Anspruch 1, wobei eine Differenz zwischen dem ersten Winkel ($\alpha$1) und dem zweiten Winkel ($\alpha$2) kleiner als 15°, bevorzugt kleiner als 5° und besonders bevorzugt kleiner als 2,5° ist.

3. Spitzenelement (1) nach Anspruch 2, wobei der erste Winkel ($\alpha$1) und/oder der zweite Winkel ($\alpha$2) zwischen 80° und 140°, bevorzugt zwischen 85° und 125° und besonders bevorzugt zwischen 90° und 100° liegt oder sogar überwiegend 90° beträgt.

4. Spitzenelement (1) nach einem der vorangehenden Ansprüche, wobei das Spitzenelement (1) einen Kernbereich (D) und einen Abdeckbereich (S) aufweist, wobei der Abdeckbereich (S) den Kernbereich (D) umgibt, wobei der Abdeckbereich (S) entlang des Verlaufs des Spitzenelements (1) seine Erstreckung in einer Richtung senkrecht zum Verlauf des Spitzenelements (S) verändert, insbesondere im Bewegungsumwandlungsabschnitt (30).

5. Spitzenelement (1) nach dem vorangehenden Anspruch, wobei ein erster Krümmungsradius $R\alpha$1, der

$$\frac{D1}{2} < R\alpha 1 < 2 \cdot D1,$$

erfüllt, dem ersten gebogenen Teilabschnitt (31) zugeordnet ist, wobei D1 im Bereich zwischen 1,2 und 4 mm liegt und der Länge des Abdeckbereichs und Kernbereichs des Spitzenelements im ersten Querschnitt entspricht.

6. Spitzenelement (1) nach einem der vorangehenden Ansprüche, wobei der Bewegungsumwandlungsabschnitt (30) eine erste Länge (L1) aufweist und der Verlauf des Spitzenelements (1) im Bewegungsumwandlungsabschnitt (30) eine laterale Verschiebung mit einer zweiten Länge (L2) bewirkt, wobei die erste Länge (L1) länger ist als die zweite Länge (L2).

7. Spitzenelement (1) nach Anspruch 6, wobei die erste Länge (L1) und/oder die zweite Länge (L2) in einem Bereich zwischen 3 und 8 mm liegt.

8. Spitzenelement (1) nach Anspruch 4, wobei der Abdeckbereich (S) entlang des Verlaufs des Spitzenelements (1), insbesondere im Bewegungsumwandlungsabschnitt (30), eine konische, gestufte und/oder exponentielle Form aufweist.

9. Spitzenelement (1) nach einem der vorhergehenden Ansprüche, wobeider Verlauf des Spitzenelements (1) im zweiten Endabschnitt (20) um einen vierten Winkel ($\alpha$4) in einer Ebene gebogen ist, die einen Teil des zweiten Endabschnitts (20) einschließt, der sich in der geneigten Richtung (T) erstreckt.

10. Das Spitzenelement (1) nach Anspruch 6, wobei

- die erste Länge (L1) gleich oder kleiner als die zweite Länge (L2) ist und/oder
- der erste Querschnittsbereich (S1) gleich oder kleiner als der zweite Querschnittsbereich (S2) ist.

11. Eine Zahnbehandlungsvorrichtung, die ein Spitzenelement (1) nach einem der Ansprüche 1 bis 10 einschließt.

**Revendications**

1. Elément d'embout (1), de préférence pour un dispositif de traitement den taire, en particulier un détartreur, l'élément d'embout (1) effectuant une vibra tion ultrasonique pendant son utilisation, comprenant

- une première section d'extrémité (10) pour fixer de manière réversible l'élé ment d'embout (1) à une pièce à main,
- une deuxième section d'extrémité (20) formant un outil dentaire, et
- une section de transformation de mouvement (30) disposée entre la prem ière section d'extrémité (10) et la deuxième section d'extrémité (20),
dans lequel

pour transformer une vibration ultrasonique ayant une première direction de vibration (V1) en une vibration ultrasonique ayant une deuxième direction de vibration (V2), la section de transformation de mouvement (30) présente une première sous-section courbée (31) et une deuxième sous-section courbée (32),
l'élément d'embout (1) présente un embout pointu, et une course de l'élément d'embout (1) est courbée

- d'un premier angle ($\alpha$1) dans la première sous-section courbée (31) et
- d'un deuxième angle ($\alpha$2) dans la deuxième

sous-section courbée (32), sachant que, dans la deuxième section d'extrémité (20), la course de l'élément d'embout (1) est courbée dans une direction inclinée (T) d'un troisième angle ($\alpha$3) par rapport à un plan principal (M) comprenant la première sous-section courbée (31) et la deuxième sous-section courbée (32), et le troisième angle ($\alpha$3) est compris entre -75° et +75°, de préférence entre -35° et 35°,

**caractérisé en ce que** l'élément d'embout (1) comprend une quantité de titane inférieure à 80 % en poids.

2. Elément d'embout (1) selon la revendication 1, dans lequel une différence entre le premier angle ($\alpha$1) et le deuxième angle ($\alpha$2) est inférieure à 15°, de préférence inférieure à 5° et plus préféren tiellement inférieure à 2,5°.

3. Elément d'embout (1) selon la revendication 2, dans lequel le premier angle ($\alpha$1) et/ou le deuxième angle ($\alpha$2) sont compris entre 80° et 140°, de préférence entre 85° et 125° et plus préférentiellement entre 90° et 100°, ou sont même sensiblement de 90°.

4. Elément d'embout (1) selon l'une des revendications précédentes,

   dans lequel l'élément d'embout (1) présente une zone centrale (D) et une zone de couverture (S), la zone de couverture (S) entoure la zone centrale (D), le long de la course de l'élément d'embout (1) la zone de couverture (S) modifie son extension dans une direction perpendiculaire à la course de l'élément d'embout (S), en particulier dans la section de transformation de mouvement (30).

5. Elément d'embout (1) selon la revendication précédente, dans lequel un premier rayon R$\alpha$1 de courbure, satisfaisant à

$$\frac{D1}{2} < R\alpha1 < 2 \cdot D1$$

est attribué à la première sous-section courbée (31), où D1 est compris entre 1,2 et 4 mm et correspond à la longueur de la zone de couverture et centrale de l'élément d'embout dans la première section transversale.

6. Elément d'embout (1) selon l'une des revendications précédentes, dans lequel la section de transformation de mouvement (30) présente une première longueur (L1), et la course de l'élément d'embout (1) dans la section de transformation de mouvement (30) provoque un déplacement latéral ayant une deuxième longueur (L2), la première longueur (L1) est plus longue que la deuxième longueur (L2).

7. Elément d'embout (1) selon la revendication 6, dans lequel la première longueur (L1) et/ou la deuxième longueur (L2) est comprise entre 3 et 8 mm.

8. Elément d'embout (1) selon la revendication 4, dans lequel la zone de couverture (S) a une forme conique, en escalier et/ou exponentielle le long de la course de l'élément d'embout (1), en particulier dans la section de transformation de mouvement (30).

9. Elément d'embout (1) selon l'une des revendications précédentes, dans lequel, dans la deuxième section d'extrémité (20), la course de l'élément d'embout (1) est courbée d'un quatrième angle ($\alpha$4) dans un plan com prenant une partie de la deuxième section d'extrémité (20) s'étendant dans la direction inclinée (T).

10. Elément d'embout (1) selon la revendication 6, dans lequel

    - la première longueur (L1) est égale ou inférieure à la deuxième longueur (L2), et/ou
    - la première surface de section transversale (S1) est égale ou inférieure à la deuxième surface de section transversale (S2).

11. Dispositif de traitement dentaire comprenant un élément d'embout (1) selon l'une des revendications 1 à 10.

EP 3 908 227 B1

Fig. 1

11

Fig. 2

Fig. 3

## REFERENCES CITED IN THE DESCRIPTION

### Patent documents cited in the description

- DE 4238384 C1
- US 20160081764 A1
- CN 204909697 U
- US 2015245884 A1
- US 5899693 A
- US 2018140403 A1